# FASCICULE DE BREVET EUROPEEN

(11) **EP 2 665 852 B1**
(45) Date de publication et mention de la délivrance du brevet: **09.11.2016**
(21) Numéro de dépôt: 12705330.4
(22) Date de dépôt: 13.01.2012
(51) Int. Cl.: D03D 3/00, B32B 1/08, D03D 3/02, D03D 11/00, D03D 25/00

(54) **STRUCTURE FIBREUSE TISSÉE MULTICOUCHES AYANT UNE PARTIE TUBULAIRE CREUSE, PROCÉDÉ DE FABRICATION ET PIÈCE COMPOSITE LA COMPORTANT.**
MEHRSCHICHTIGE FASERSTRUKTUR MIT EINEM HOHLEN RÖHRENFÖRMIGEN TEIL, HERSTELLUNGSVERFAHREN DAFÜR UND VERBUNDTEIL DAMIT
MULTILAYER WOVEN FIBROUS STRUCTURE INCLUDING A HOLLOW TUBULAR PART, PRODUCTION METHOD THEREOF AND COMPOSITE PART COMPRISING SAME

(30) Priorité: 21.01.2011 FR 1150499
(43) Date de publication de la demande: 27.11.2013
(73) Titulaire: SNECMA, 75015 Paris (FR)
(72) Inventeur: GODON, Thierry, F-93270 Sevran (FR); DAMBRINE, Bruno, Jacques, Gérard, F-77820 Le Chatelet en Brie (FR)
(74) Mandataire: Delumeau, François Guy
(86) Numéro de dépôt international: PCT/FR2012/050087
(87) Numéro de publication internationale: WO 2012/098327

(56) Documents cités:
- WO-A1-2012/080617
- JP-A- 1 052 845
- US-A- 5 024 874
- US-B1- 7 484 539

## Description

### Arrière-plan de l'invention

L'invention concerne la réalisation d'une structure fibreuse par tissage multicouches et plus particulièrement une structure fibreuse comprenant au moins une partie creuse telle que notamment une partie tubulaire ou sensiblement tubulaire.

Le domaine d'application est notamment celui de la réalisation de structures fibreuses permettant de constituer des préformes fibreuses pour des pièces en matériau composite obtenues par densification de préformes fibreuses par une matrice, ou des pièces obtenues par pressage isostatique à chaud ou forgeage et soudure-diffusion de préformes fibreuses métalliques, notamment, mais pas exclusivement, des pièces de turbomoteurs aéronautiques. Des exemples sont :
- des pièces comprenant au moins une partie tubulaire solidaire d'une autre partie telle qu'un panneau ou une platine, la partie tubulaire étant destinée à permettre notamment le support, le guidage ou l'articulation d'un élément sur un côté du panneau,
- des pièces telles que des bras creux de support ou des conduits éventuellement cloisonnés longitudinalement pour former plusieurs passages.

La réalisation de préformes fibreuses en une seule pièce à partir de structure tissée multicouches pour former des pièces en matériau composite de forme complexe a déjà été proposée.

Par tissage multicouches, ou tissage tridimensionnel, on entend ici un processus de tissage avec plusieurs couches de fils de chaîne et un ensemble de fils de trame, au moins une partie des fils de trame liant des fils de chaîne appartenant à différentes couches de fils de chaîne. Plusieurs armures de tissage multicouches peuvent être utilisées telles que des armures interlock, avec des fils de trame d'une même colonne de trame ayant un même mouvement dans un plan de l'armure, ou des armures multi-satin, multi-toile ou multi-sergé. On pourra se référer au document WO 2006/136755.

Il est connu de réaliser une structure tissée multicouches permettant, par conformation, d'obtenir une préforme ayant une forme voisine de celle d'une pièce en matériau composite à réaliser. On pourra se référer aux documents US 7 241 112 et WO 2010/061139 qui concernent la réalisation d'aubes en matériau composite pour des turbomoteurs.

Le document US 5 024 874 divulgue une structure fibreuse tissée en une seule pièce par tissage multicouche comprenant une partie creuse réalisée à l'aide d'un palier métallique.

Le document WO 2012/080617 A1 (Article 54(3) CBE) divulgue une structure fibreuse selon le préambule de la revendication 8.

### Objet et résumé de l'invention

L'invention a pour but de fournir un procédé de réalisation d'une structure tissée en une seule pièce par tissage multicouches permettant d'obtenir une préforme fibreuse pour une pièce en matériau composite ayant au moins une partie creuse, notamment une partie tubulaire ou sensiblement tubulaire, et présentant une tenue mécanique élevée.

Selon un premier aspect du procédé, celui-ci comprend :
- le tissage des fils de chaîne d'au moins un premier ensemble de couches de fils de chaîne avec des fils de trame dont au moins certains sont amenés sur une distance supérieure à la largeur du premier ensemble de couches de fils de chaîne mesurée en sens trame pour disposer de parties d'extrémité de fils de trame s'étendant au-delà de la zone de tissage,
- le retour des parties d'extrémité desdits fils de trame pour les tisser avec des fils de chaîne en les réinsérant dans des couches de fils de chaîne, et
- la formation d'une partie creuse par repli sur lui-même du premier ensemble tissé de couches de fils de chaîne et traction sur les extrémités des fils de trame réinsérés.

Les parties d'extrémité libres de fils de trame peuvent être réinsérées dans des couches de fils de chaîne d'un deuxième ensemble de couches de fils de chaîne, le premier et le deuxième ensemble de couches de fils de chaîne étant superposés et liés l'un à l'autre sur une partie seulement de la largeur en sens trame du premier ensemble de fils de chaîne.

En variante, les parties d'extrémité libres de fils de trame peuvent être réinsérées dans des couches de fils de chaîne du premier ensemble de couches de fils de chaîne en des emplacements décalés en sens chaîne par rapport aux emplacements de leur insertion initiale.

Selon un deuxième aspect du procédé, pour réaliser une structure tissée avec une partie creuse cloisonnée longitudinalement, le procédé comprend :
- le tissage des fils de chaîne d'un premier ensemble de couches de fils de chaîne avec des fils de trame dont au moins certains sont insérés dans les couches de fils de chaîne du premier ensemble de couches de fils de chaîne en étant amenés sur une distance supérieure à la longueur du premier ensemble de couches de fils de chaîne mesurée en sens trame pour disposer de parties d'extrémité de fils de trame s'étendant au-delà de la zone de tissage,
- le tissage des fils de chaîne d'un deuxième ensemble de couches de fils de chaîne avec des fils de trame dont au moins certains sont insérés dans les couches de fils de chaîne du deuxième ensemble de couches de fils de chaîne en étant amenés sur une distance supérieure à la longueur du deuxième ensemble de couches de fils de chaîne mesurée en sens trame pour disposer de parties d'extrémité de fils de trame s'étendant au-delà de la zone de tissage, le premier et le deuxième ensemble de couches de fils de chaîne étant disposés l'un au-dessus de l'autre et liés l'un à l'autre sur une partie seulement de leur largeur en sens trame,
- le retour desdites parties d'extrémité de fils de trame pour les tisser avec des fils de chaîne en les réinsérant dans des couches de fils de chaîne, et
- la formation de ladite partie creuse cloisonnée par repli sur eux-mêmes du premier et du deuxième ensemble de couches de fils de chaîne et traction sur les extrémités des fils de trame réinsérés.

Lesdites parties d'extrémité des fils de trame peuvent être réinsérées dans des couches de fils de chaîne d'un troisième ensemble de couches de fils de chaîne, le premier, le deuxième et le troisième ensemble de fils de chaîne étant superposés, et le premier et le deuxième ensemble de couches de fils de chaîne étant liés au troisième ensemble de couches de fils de chaîne sur une partie seulement de leur largeur en sens trame.

En variante, lesdites parties d'extrémité des fils de trame peuvent être réinsérées dans des couches de fils de chaîne du premier et du deuxième ensemble de couches de fils de chaîne en des emplacements décalés en sens chaîne par rapport aux emplacements de leur insertion initiale.

Dans tous les cas, la partie creuse peut être formée sur une partie seulement de la longueur de la structure tissée en sens chaîne.

Ainsi, l'invention est remarquable en ce que, dans au moins une partie de la structure tissée destinée à former une partie creuse, un ensemble de fils de chaîne est tissé avec des fils de trame présentant des sur-longueurs permettant de les réinsérer dans la chaîne pour les tisser à nouveau avec des fils de chaîne. De la sorte, cet ensemble de fils de chaîne peut être replié sur lui-même en boucle pour former la partie creuse avec des fils de trame qui s'étendent continûment sur tout le pourtour de la partie creuse et confèrent ainsi des propriétés mécaniques élevées dans la partie creuse de la pièce obtenue après mise en forme et densification de la structure tissée.

L'invention vise aussi une structure fibreuse tissée selon la revendication 8.

Selon un mode de réalisation, la structure fibreuse comprend une partie creuse et une autre partie adjacente à la partie creuse est liée à celle-ci par tissage.

Selon un mode de réalisation, la partie creuse est cloisonnée longitudinalement.

L'invention vise aussi une pièce en matériau composite présentant au moins une partie creuse, notamment tubulaire ou sensiblement tubulaire, et comprenant une structure fibreuse de renfort telle que définie ci-avant ou obtenue par un procédé tel que défini plus haut, la structure fibreuse de renfort étant densifiée par une matrice.

### Brève description des dessins

L'invention sera mieux comprise à la lecture de la description faite ci-après, à titre indicatif mais non limitatif, en référence aux dessins annexés, sur lesquels :
- la figure 1 est une vue schématique en perspective d'une première pièce en matériau composite à renfort fibreux densifié par une matrice ;
- les figures 2 à 4 illustrent très schématiquement des étapes successives de réalisation d'une structure fibreuse tissée multicouches pour former le renfort fibreux d'une pièce telle que celle de la figure 1, selon un premier mode de réalisation de l'invention ;
- les figures 5A à 5D montrent des plans de trame successifs dans une partie de la structure fibreuse à l'étape de la figure 2 ;
- les figures 6A à 6D montrent des plans de trame successifs dans une autre partie de la structure fibreuse à l'étape de la figure 2 ;
- la figure 7 montre une variante d'armure de tissage ;
- les figures 8 et 9 sont des vues schématiques en perspective d'une structure fibreuse tissée multicouches et d'une pièce correspondante en matériau composite selon une variante du premier mode de réalisation ;
- les figures 10 et 11 sont des vues schématiques en perspective d'une structure fibreuse tissée multicouches et d'une pièce correspondante en matériau composite selon une autre variante du premier mode de réalisation ;
- la figure 12 est une vue schématique en perspective d'une deuxième pièce en matériau composite à renfort fibreux densifié par une matrice ;
- la figure 13 illustre très schématiquement une étape de réalisation d'une structure fibreuse tissée multicouches pour former le renfort fibreux d'une pièce telle que celle de la figure 12, selon un deuxième mode de réalisation ;
- les figures 14, 15 et 16 montrent des plans de trame dans différentes parties de la structure fibreuse à l'étape de la figure 13 ;
- la figure 17 illustre très schématiquement une étape de réalisation d'une structure fibreuse tissée multicouches selon une variante du deuxième mode de réalisation ;
- la figure 18 est une vue schématique en perspective d'une troisième pièce en matériau composite à renfort fibreux densifié par une matrice ;
- les figures 19, 20 et 21 illustrent très schématiquement des étapes successives de réalisation d'une structure fibreuse tissée multicouches pour former le renfort fibreux d'une pièce telle que celle de la figure 18, selon un troisième mode de réalisation ;
- les figures 22 et 23 montrent des plans de trame dans deux parties différentes de la structure fibreuse à l'étape de la figure 19 ;
- la figure 24 est une vue schématique en perspective d'une quatrième pièce en matériau composite à renfort fibreux densifié par une matrice ;
- les figures 25, 26 et 27 illustrent très schématiquement des étapes successives de réalisation d'une structure fibreuse tissée multicouches pour former le renfort fibreux d'une pièce telle que celle de la figure 24, selon un quatrième mode de réalisation ;
- les figures 28A à 28D montrent des plans de trame successifs dans la structure fibreuse à l'étape de la figure 25 ; et
- la figure 29 est une vue schématique en perspective d'une cinquième pièce en matériau composite à renfort fibreux densifié par une matrice.

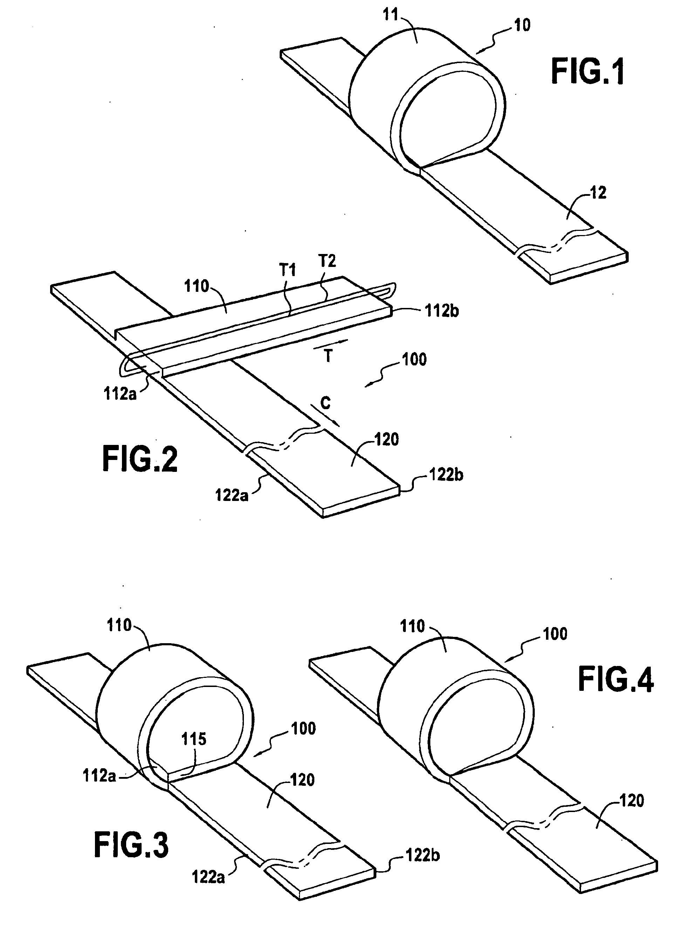

On notera que sur les figures 2, 13, 19 et 25, les parties non tissées de la structure fibreuse ne sont pas représentées.

### Description détaillée de modes de réalisation

La figure 1 montre une pièce 10 en matériau composite ayant un renfort fibreux densifié par une matrice. La pièce 10 comprend une partie creuse tubulaire 11 formant un anneau solidaire d'une platine 12, la partie tubulaire 11 étant liée à la platine 12 sur une partie de son pourtour et sur toute sa longueur. La pièce 10 peut par exemple être utilisée comme pièce de support ou de fixation d'un élément introduit dans la partie tubulaire 11, la platine 12 pouvant être fixée sur une paroi par exemple par vis.

Un mode de réalisation d'une structure fibreuse tissée en une seule pièce par tissage multicouches et formant, après conformation, une préforme fibreuse apte à constituer le renfort fibreux de la pièce 10 sera maintenant décrit en référence aux figures 2, 3, 4, 5A à 5D et 6A à 6D.

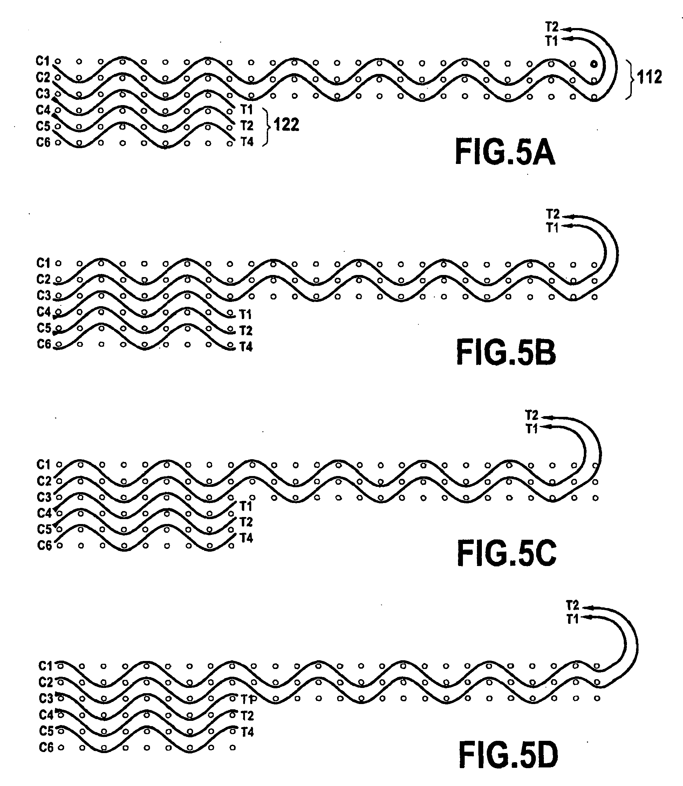

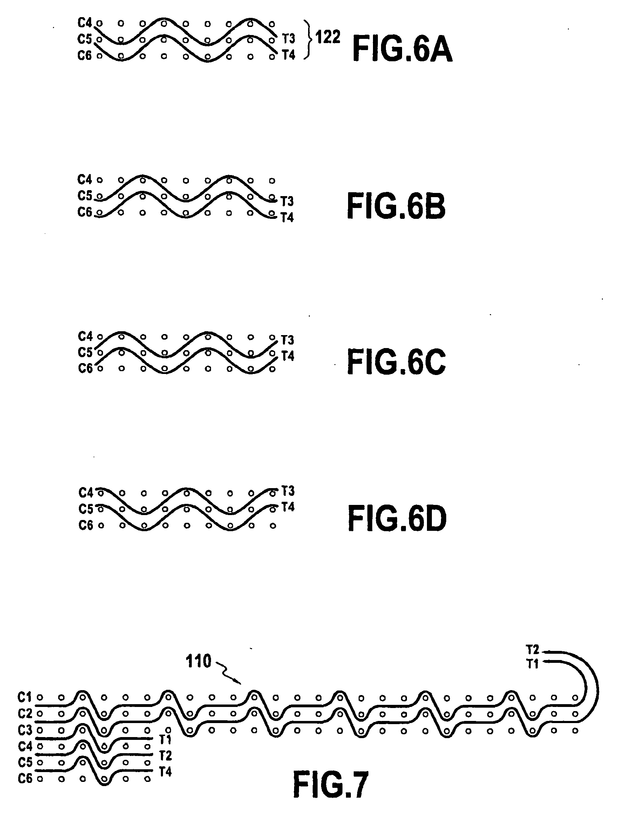

La figure 2 montre la structure fibreuse 100 au stade du tissage, avant conformation. La structure fibreuse 100 comprend une première partie tissée 110 destinée, après conformation par repli sur elle-même, à former la partie de renfort fibreux correspondant à la partie tubulaire 11 et une deuxième partie tissée 120 destinée à former la partie de renfort fibreux correspondant à la platine 12. Les figures 5A à 5D montrent à titre d'exemple 4 plans de trame successifs dans la partie 110 tandis que les figures 6A à 6D montrent à titre d'exemple 4 plans de trame successifs dans la partie 120.

Le tissage est réalisé avec un premier ensemble 112 de couches de fils de chaîne C1, C2, C3 pour la partie 110 et un deuxième ensemble 122 de couches de fils de chaîne C4, C5, C6 pour la partie 120. Dans la partie 110, les couches de fils de chaîne s'étendent en sens trame (flèche T) sur une distance correspondant sensiblement à la longueur développée d'une circonférence de la partie tubulaire 11. Dans la partie 120, les couches de fils de chaîne s'étendent en direction trame sur une distance correspondant sensiblement à la largeur de la platine 12. Les ensembles de couches fils de chaîne 112 et 122 sont disposés l'un au-dessus de l'autre.

Deux premiers bords respectifs 112a et 122a des parties 110 et 120, s'étendant en sens chaîne (flèche C), sont situés sensiblement dans un même plan tandis que le deuxième bord opposé 112b de la partie 110 est situé au-delà du deuxième bord opposé 122b de la partie 120.

Sur la figure 2, par souci de clarté, seules les enveloppes des parties tissées 110 et 120 sont représentées, comme déjà indiqué. En particulier, les fils de chaîne non tissés du premier ensemble 112 de couches de fils de chaîne ne sont pas représentés, la partie tissée 110 s'étendant en sens chaîne sur une distance sensiblement égale à la dimension longitudinale de la partie tubulaire 11 laquelle, dans l'exemple illustré, est inférieure à la longueur de la platine 12.

Comme le montrent les figures 5A à 5D, le tissage dans la partie 110 est réalisé avec une armure de type interlock, les couches de fils de chaîne étant liées, dans chaque plan de trame, par des fils de trame T1, T2 d'une même colonne de fils de trame. Les fils de trame T1, T2 sont introduits avec sur-longueur pour présenter des parties d'extrémité s'étendant au-delà de la zone de tissage, c'est-à-dire au-delà du bord 112b. Ces parties d'extrémité ont une longueur suffisante pour pouvoir être ramenées du côté du bord 122a et être réinsérées dans des couches de fils de chaîne pour être tissées avec des fils de chaîne. Ainsi, le fil de trame T1, après avoir lié entre eux des fils de chaîne des couches C1 et C2, est réutilisé pour lier entre eux des fils de chaîne de la couche C4 de l'ensemble 122 avec des fils de chaîne de la couche C3 de l'ensemble 112, réalisant ainsi une liaison entre les parties 110 et 120. Le fil de trame T2, après avoir lié entre eux des fils de chaîne des couches C2 et C3, est réutilisé pour lier entre eux des fils de chaîne des couches C4 et C5. Le retour des parties d'extrémité des fils de trame tissés initialement avec sur-longueur n'est montré sur la figure 2 que pour deux fils T1, T2 d'un seul plan de trame.

Comme le montrent les figures 6A à 6D, le tissage dans la partie 120 est réalisé avec la même armure interlock, par exemple, les couches de fils de chaîne étant liées, dans chaque plan de trame, par des fils de trame T3, T4. Chaque fil T3 lie entre eux des fils de chaîne des couches C4 et C5 tandis que chaque fil T4 lie entre eux des fils de chaîne des couches C5 et C6.

Sur les figures 5A à 5D, on retrouve le fil de trame T4 liant entre eux des fils de chaîne des couches C5 et C6.

Les plans des figures 5A à 5D se déduisent l'un de l'autre par translation en sens trame d'une distance correspondant à un pas entre colonnes de fils de chaîne. Il en est de même pour les plans des figures 6A à 6D.

Bien entendu, le nombre de couches de fils de chaîne dans les ensembles 110 et 120 peut être différent de 3, le nombre de couches de fils de trame étant adapté en conséquence.

En outre, des motifs de tissage interlock différents peuvent être adoptés pour les parties 110 et 120 et/ou dans ces parties mêmes.

On notera aussi que seulement certains des fils de trame liant entre eux des fils de chaîne dans la partie 110 peuvent être tissés avec sur-longueur pour être réinsérés dans la chaîne, les autres fils de trame étant tissés classiquement sur la largeur seulement de la partie 110 et n'étant pas réintroduits dans la partie 120. On peut aussi faire varier le nombre de fils de chaîne par colonne de fils de chaîne dans la partie 110 pour augmenter localement l'épaisseur.

Après tissage, les parties non tissées des fils étant supprimées, la structure tissée 100 est mise en forme comme représenté sur la figure 3 en repliant sur elle-même la partie 110 avec traction exercée sur les extrémités des fils de trame réinsérés T1, T2. La mise en forme de la partie 110 peut être réalisée en enroulant celle-ci autour d'un noyau. On obtient alors une partie creuse entièrement délimitée par une paroi tissée multicouches comprenant plusieurs couches de fils liées entre elles par tissage dans toute l'épaisseur de la paroi.

Dans la partie tubulaire formée par repli de la partie 110, le bord 112a forme un décrochement 115. Celui-ci peut être éliminé en retirant quelques fils de chaîne et en coupant les parties de fils de trame laissées alors non tissées afin que la face interne de la partie tubulaire formée par repli de la partie 110 se raccorde à un niveau correspondant à la face supérieure de la partie 120 (figure 4). En variante, plutôt que de retirer des fils de chaîne après tissage, on pourrait former l'ensemble de couches de fils de chaîne pour la partie 110 avec un nombre de couches croissant progressivement depuis le bord 112a et sur une distance, en sens trame, correspondant à la largeur de l'ensemble 120. Une telle façon de faire varier l'épaisseur pourrait être appliquée à tout niveau des parties 110 et 120 si désiré.

La figure 7 montre à titre d'exemple un plan de trame dans la partie 110 de la structure fibreuse avec une armure de tissage de type multi-satin, différente de l'armure interlock des figures 5A - 5D et 6A - 6D.

Dans le mode de réalisation décrit ci-avant, les fils de trame tissés initialement avec sur-longueur sont réinsérés dans la chaîne dans le même plan de trame que lors de leur insertion initiale. En variante, cette réinsertion des fils de trame tissés initialement avec sur-longueurs pourra être réalisée dans un plan de trame suivant différent, non nécessairement celui immédiatement adjacent au plan de trame correspondant à leur insertion initiale.

Lors du tissage, les parties d'extrémité des fils de trame tissés avec sur-longueurs pourront être ramenés par exemple manuellement du côté de l'alimentation en fils de trame pour être ensuite réinsérées et tissées comme les autres fils de trame. Le tissage est réalisé au moyen d'un métier à tisser de type Jacquard adapté au tissage multicouches, un tel métier étant bien connu en soi.

Selon l'application envisagée, la pièce dont la structure tissée multicouches forme le renfort fibreux peut être en matériau composite de type fibres-polymère organique ou en matériau composite thermostructural.

Dans le premier cas, les fibres de la structure tissée peuvent être notamment des fibres de carbone, de verre, d'aramide ou de céramique tandis que la matrice peut être une résine organique, par exemple un polymère époxyde, bismaléimide ou polyimide. L'imprégnation par une résine précurseur de la matrice peut être réalisée immédiatement après tissage (à l'étape de la figure 2) et avant mise en forme de la structure tissée, la structure tissée pré-imprégnée étant mise en forme par enroulement de la partie 110 autour d'un noyau et étant maintenue dans la forme voulue au moyen d'un outillage formant moule pendant la polymérisation de la résine. En variante, la structure tissée sèche peut être mise en forme par enroulement de la partie 110 autour d'un noyau puis maintenue dans la forme voulue au moyen d'un outillage formant moule dans lequel la résine est injectée par un processus de type RTM ("Resin Transfer Molding"). Ces deux processus sont bien connus en soi.

Dans le cas d'un matériau composite thermostructural, les fibres de la structure tissée peuvent être en carbone ou céramique tandis que la matrice peut être en carbone ou céramique. Dans le cas de pièces destinées à des parties chaudes de turbomoteur aéronautique, on choisira de préférence un matériau composite à matrice céramique, ou CMC. La réalisation de pièces de forme complexe en matériau thermostructural est bien connue. Une première étape de consolidation par une première phase de matrice peut être réalisée en utilisant une résine précurseur de la matrice de consolidation en carbone ou céramique. L'imprégnation peut être réalisée immédiatement après tissage (à l'étape de la figure 2) et avant mise en forme ou être réalisée après mise en forme, la structure tissée étant maintenue en forme dans un outillage. Après polymérisation et pyrolyse de la résine, on obtient une structure tissée consolidée conservant sa forme sans nécessiter d'outillage de maintien. La densification peut être alors poursuivie par voie liquide (imprégnation par une résine précurseur de carbone ou céramique, polymérisation et pyrolyse) ou par infiltration chimique en phase gazeuse, ou CVI ("Chemical Vapor Infiltration"). Un revêtement d'interphase fibres/matrice peut être préalablement formé. On pourra en particulier se référer aux documents US 2010/015428 et WO 2010/061139.

On pourra aussi réaliser une pièce à partir d'une structure tissée en fils et/ou câbles en métal ou alliage métallique, par exemple en titane ou alliage de titane, ou en fils composites comprenant une âme centrale céramique, par exemple en fibres à base de carbure de silicium SiC, enduites de métal ou alliage métallique, par exemple de titane ou alliage de titane, ou de bore.

Dans le cas d'une structure tissée en fils et/ou câbles métalliques ou enduits d'un matériau métallique, la réalisation de la pièce peut comprendre une première étape de pressage isostatique à chaud, ou HIP ("Hot Isostatic Pressing") ou de forgeage isotherme sous vide. L'application de la chaleur alliée à la pression élimine les espaces vides de la structure tissée par déformation plastique et fluage du métal des fils ou enduisant les fils. La pièce est définitivement formée par soudage-diffusion sous vide, un tel processus combinant HIP ou forgeage isotherme sous vide et soudage-diffusion sous vide appliqué sur une texture tissée en fils métalliques ou enduits de métal étant en soi connu.

Dans le mode de réalisation décrit ci-avant, une structure tissée multicouches est réalisée en vue de la fabrication d'une pièce présentant une platine solidaire d'une partie creuse tubulaire s'étendant sur une partie seulement de la longueur de la platine.

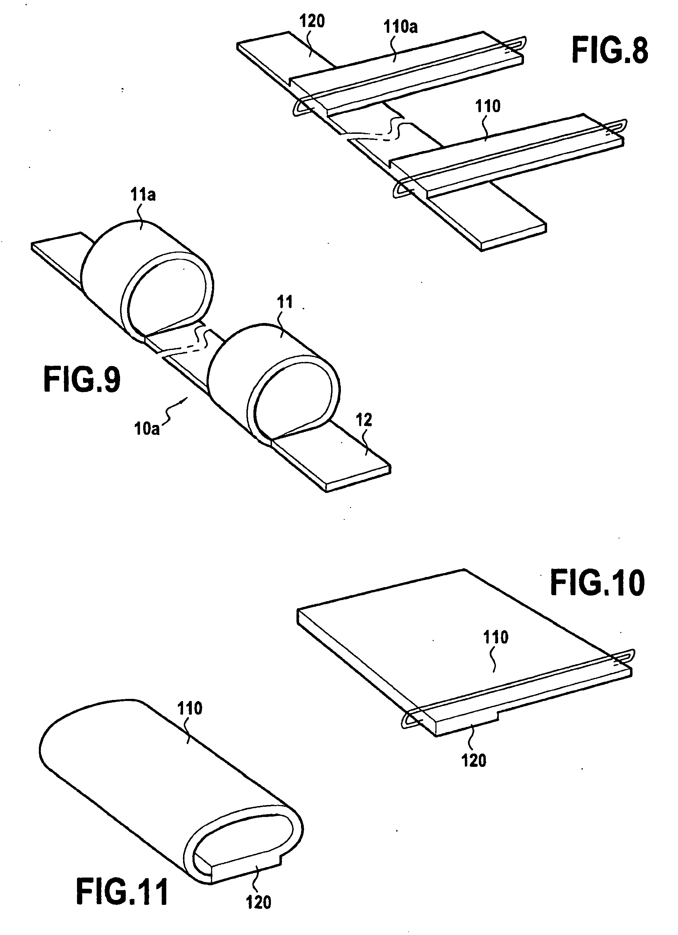

La figure 8 montre, au stade de tissage, une structure fibreuse tissée multicouches qui se distingue de celle de la figure 2 en ce qu'elle présente une partie tissée 110a en supplément de la partie 110 et semblable à celle-ci, les parties tissées 110 et 110a étant situées à distance l'une de l'autre le long de la partie 120. Après repli sur elles-mêmes des parties 110 et 110a, on obtient une préforme fibreuse pour une pièce telle que celle 10a de la figure 9 présentant une platine 12 solidaire de deux parties creuses tubulaires 11, 11a distantes l'une de l'autre et par exemple alignées. On pourrait bien entendu ainsi former plus de deux parties creuses tubulaires et/ou de géométries éventuellement différentes.

La figure 10 montre, au stade du tissage, une structure fibreuse tissée multicouches qui se distingue de celle de la figure 2 en ce que les parties 110 et 120 s'étendent en sens chaîne sur une même longueur. Après repli sur elle-même de la partie 110, on obtient (figure 11) une préforme fibreuse ayant une forme creuse essentiellement tubulaire entièrement délimitée par une paroi tissée multicouches comprenant plusieurs couches de fils liées entre elles par tissage dans toute l'épaisseur de la paroi. Une telle préforme peut par exemple être utilisée pour forme un bras creux de carter intermédiaire dans un turbomoteur aéronautique.

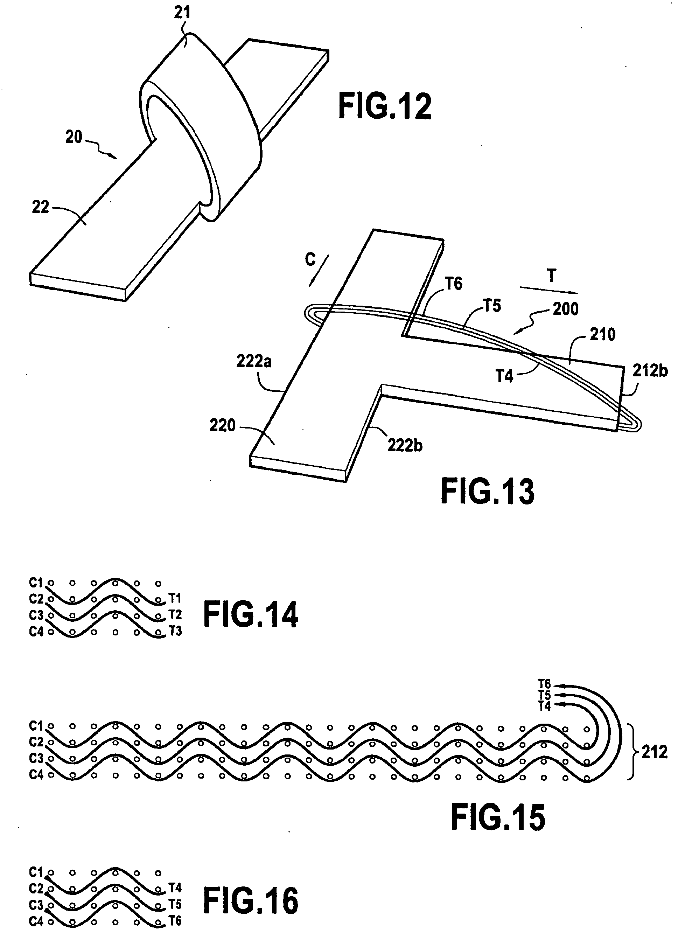

La figure 12 montre une autre pièce 20 comprenant une partie creuse tubulaire formant un anneau 21 solidaire d'une platine 22 et pouvant par exemple être utilisée aux mêmes fins que la pièce 10 de la figure 1. On note que les faces d'extrémités de la partie tubulaire 21 ne sont pas perpendiculaires à la direction longitudinale de la partie 22.

Un mode de réalisation d'une texture fibreuse tissée en une seule pièce par tissage multicouches et formant, après conformation, une préforme fibreuse de la pièce 20 sera maintenant décrit en référence aux figures 13 à 16.

La figure 13 montre la structure fibreuse 200 au stade du tissage, avant conformation. La structure fibreuse 200 comprend deux parties tissées 210, 220. La partie 220 est destinée à former la partie de préforme fibreuse correspondant à la platine 22 et présente des bords longitudinaux opposés 222a, 222b en sens chaîne (flèche C). La partie 210 s'étend en sens trame (flèche T) à partir du bord 222a et jusqu'au bord opposé 212b sur une distance permettant, après repli, de former, avec un segment de la partie 220, la partie de préforme fibreuse correspondant à la partie annulaire 21. En sens chaîne, la partie 210 s'étend sur une distance inférieure en comparaison avec la partie 220. Sur la figure 13, seules sont représentées les enveloppes des parties tissées 210, 220.

La figure 14 montre un plan de trame dans la partie 220, à l'avant de l'emplacement de la partie 210. Le tissage est réalisé avec un ensemble 212 de couches de fils de chaîne C1 à C4 liées par des fils de trame T1, T2, T3 d'une même colonne de fils de trame, l'armure de tissage étant par exemple de type interlock.

La figure 15 montre un plan de trame au niveau de la partie 210. Sur la distance totale en sens trame des parties accolées 210, 220, le tissage est réalisé avec par exemple des fils de trame T4, T5, T6 liant des fils de chaîne des couches C1 à C4 avec la même armure interlock que celle montrée sur la figure 14. Les fils T4, T5, T6 sont tissés avec des sur-longueurs pour présenter des parties d'extrémité s'étendant au-delà de la zone de tissage. Ces parties d'extrémité ont une longueur suffisante pour pouvoir être ramenées du côté du bord 222a et être réinsérées dans la chaîne pour être tissées avec des fils de chaîne.

La réinsertion des parties d'extrémité libre des fils de trame tissés avec sur-longueurs est réalisée dans les couches de fils de chaîne C1 à C4 de l'ensemble 212, en des emplacements respectifs décalés vers l'arrière en sens chaîne. Comme le montre la figure 13, les parties d'extrémité des fils de trame du premier plan de trame de la partie tissée 210 sont réinsérées dans les couches de fils de chaîne pour former par exemple le premier plan de trame de la partie 220 suivant le dernier plan de trame dans la partie 210. On procède de façon similaire pour les fils de trame (non montrés sur la figure 13) de tous les autres plans de trame de la partie 210. La figure 16 montre un tel plan de trame dans la partie 210 avec les fils de chaîne tissés par les parties d'extrémité des fils de trame T4, T5, T6 de la figure 15. Dans cet exemple, le décalage en sens chaîne des parties d'extrémité de fils de trame réinsérées est réalisé sur une distance correspondant à la dimension de la partie 210 en sens chaîne. En fonction notamment de la capacité de déformation de la partie 210 lors de son repli, ce décalage pourrait être réalisé sur une distance différente, par exemple plus courte. Dans ce dernier cas, les premiers fils de trame tissés avec sur-longueurs dans la partie 210 sont réintroduits dans cette même partie, les sur-longueurs étant déterminées en conséquence.

Bien entendu, le nombre de couches de fils de chaîne dans les parties 210, 220 peut être différent de quatre, le nombre de couches de fils de trame étant adapté en conséquence.

Après tissage, les parties non tissées des fils étant supprimées, la structure tissée 200 est mise en forme par repli de la partie 210 pour amener son bord 212b contre le bord 222a de la partie 220 avec traction sur les extrémités des fils de trame réinsérés. On obtient ainsi une préforme fibreuse ayant une forme voisine de celle de la pièce 20 et ayant une partie creuse entièrement délimitée par une paroi tissée multicouches comprenant plusieurs couches de fils liées entre elles par tissage dans toute l'épaisseur de la paroi. La conformation de la structure fibreuse 200 au moyen d'un outillage pour obtenir une préforme fibreuse de la pièce 20 et le traitement de la préforme fibreuse pour obtenir la pièce voulue peuvent être réalisés comme décrit plus haut pour le premier mode de réalisation.

Dans l'exemple de la figure 13, les parties d'extrémité des fils de trame tissés avec sur-longueurs dans la partie 210 sont réinsérés dans des couches de fils de chaîne en des emplacements décalés vers l'arrière en sens chaîne.

En variante, cette réinsertion peut être réalisée en des emplacements décalés vers l'avant en sens chaîne.

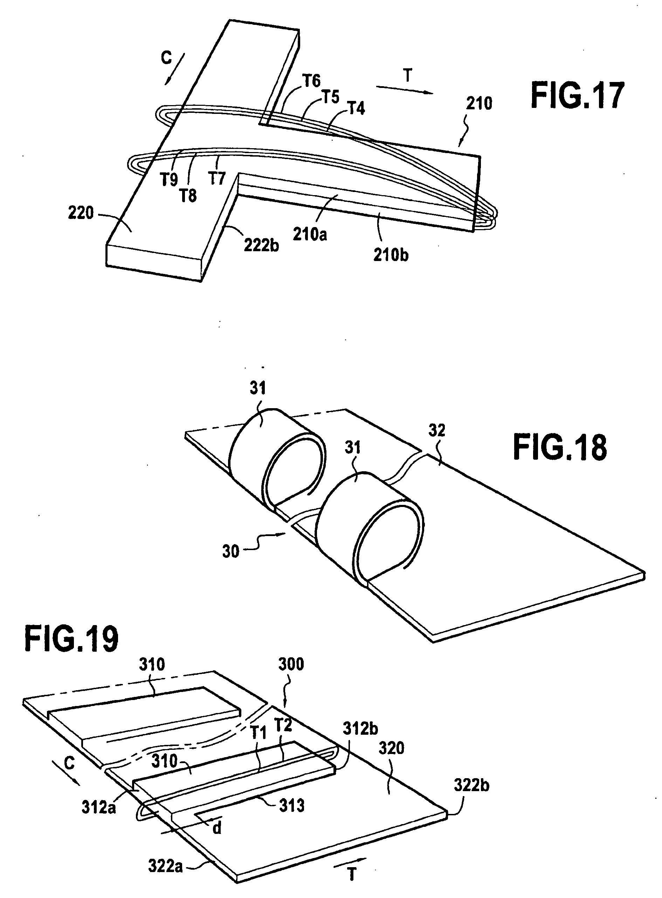

Toujours en variante, comme montré sur la figure 17, la partie 210 peut être formée de deux sous-ensembles tissés superposés 210a, 210b non liés entre eux. Les fils de trame T4, T5, T6 liant entre elles des couches de fils de chaîne dans la partie 210a et tissés avec sur-longueur ont leurs extrémités réinsérées dans des couches de fils de chaîne en des emplacements décalés vers l'arrière en sens chaîne. Les fils de trame T7, T8, T9 situés initialement dans le même plan de trame que les fils T4, T5, T6, liant entre elles des couches de fils de chaîne dans la partie 210b et tissés avec sur-longueur, ont leurs extrémités réinsérées dans des couches de fils de chaîne en des emplacements décalés vers l'avant en sens chaîne. Après tissage, les sous-ensembles 210a, 210b sont repliés en formant deux boucles s'écartant l'une de l'autre en sens chaîne à partir d'une même origine sur le bord 222b de la partie 220.

La figure 18 montre encore une autre pièce 30 comprenant deux parties creuses tubulaires 31 formant des anneaux solidaires d'un panneau 32 au voisinage d'un bord de celui-ci, les parties tubulaires étant situées à distance l'une de l'autre et sensiblement coaxiales. La pièce 30 peut par exemple être utilisée comme porte ou capot pivotant autour d'un axe engagé dans les parties tubulaires 31.

Un mode de réalisation d'une structure fibreuse tissée en une seule pièce par tissage multicouches et formant, après conformation, une préforme fibreuse de la pièce 30 sera maintenant décrit en référence aux figures 19, 20, 21, 22 et 23.

La figure 19 montre la structure fibreuse 300 au stade du tissage, avant conformation. La structure fibreuse 300 comprend deux premières parties tissées 310 destinées, après conformation par repli sur elles-mêmes, à former les parties de renfort fibreux correspondant aux parties tubulaires 31, et une deuxième partie tissée 320 destinée à former la partie de renfort fibreux correspondant au panneau 32. Sur la figure 19, seules les enveloppes des parties tissées sont représentées pour plus de clarté. La partie 320 présente en sens chaîne (flèche C) deux bords longitudinaux opposés 322a, 322b. Chaque partie 310 se superpose à la partie 320 et présente des bords longitudinaux 312a, 312b. Les bords 312a sont sensiblement confondus avec le bord 322a, tandis que les bords 312b se situent en retrait du bord 322b, les parties 310 s'étendant, en sens trame (flèche T), sur une distance correspondant à la longueur développée d'une circonférence d'une partie tubulaire 31, cette distance étant dans l'exemple illustré inférieure à la dimension de la partie 320. On note aussi que chaque partie 310 est liée à la partie 320 sur une partie d seulement de sa dimension en sens trame à partir des bords 312a, 322a, de sorte qu'une zone de déliaison 313 est ménagée entre chaque partie 310 et la partie 320.

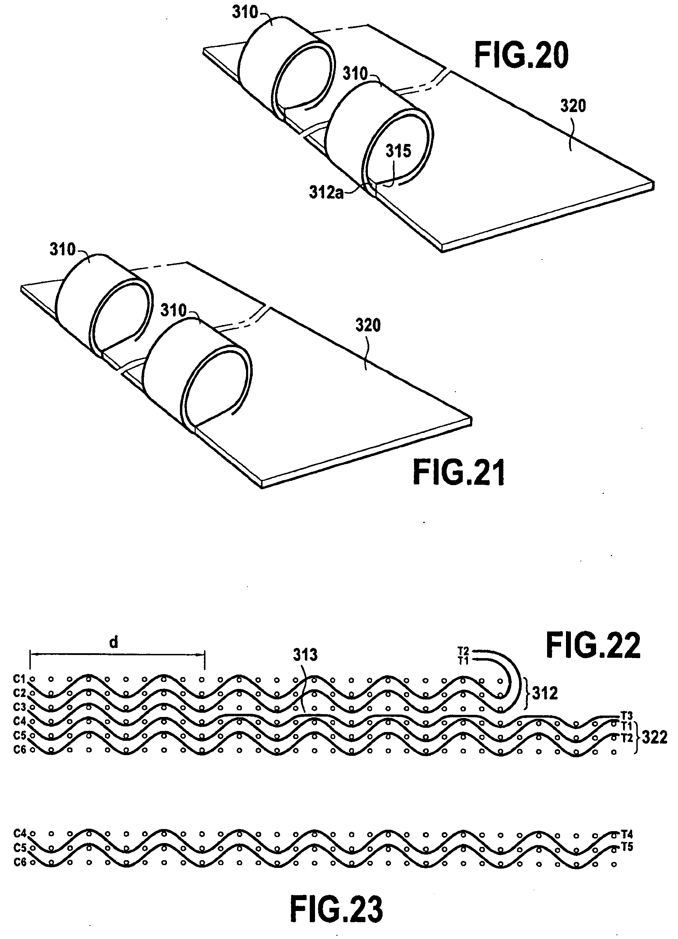

La figure 22 montre un plan de trame dans la structure tissée 300 au niveau de la superposition entre une partie 310 et la partie 320. Le tissage est réalisé avec un premier ensemble 312 de couches de fils de chaîne C1 à C3 pour la partie 310 et un deuxième ensemble 322 de couches de fils de chaîne C4 à C6 pour la partie 320. Un fil de trame T1 lie des fils de chaîne des couches C1 et C2 tandis qu'un fil de trame T2 lie les fils de chaîne des couches C2 et C3. Un fil de trame T3 lie des fils de chaîne des couches C3 et C4 sur la distance d seulement afin de ménager la zone de déliaison 313.

Les fils de trame T1 et T2 sont introduits avec sur-longueur pour présenter des parties d'extrémité s'étendant au-delà de la zone de tissage, c'est-à-dire au-delà du bord 312b. Ces parties d'extrémité ont une longueur suffisante pour pouvoir être ramenées du côté du bord 322a et être réinsérées dans la chaîne pour être tissées avec des fils de chaîne. Ainsi, le fil de trame T1, après avoir lié entre eux des fils de chaîne des couches C1 et C2, est réutilisé pour lier entre eux des fils de chaîne des couches C4 et C5 du deuxième ensemble 322 de couches de fils de chaîne. De même, le fil de trame T2, après avoir lié entre eux des fils de chaîne des couches C2 et C3, est réutilisé pour lier entre eux des fils de chaîne des couches C5 et C6 du deuxième ensemble 322 de couches de fils de chaîne. Un seul plan de trame est montré, les autres s'en déduisant par décalage d'un pas entre colonne de fils de chaîne. Sur la figure 19, le retour de 2 fils de trame T1, T2 seulement est montré.

La figure 23 montre un plan de trame dans la partie 320 de la structure tissée hors superposition avec une partie 310. Un fil de trame T4 lie entre eux des fils de chaîne des couches C4 et C5 tandis qu'un fil de trame T5 lie entre eux des fils de chaîne des couches C5 et C6 de la même manière que les parties réinsérées des fils T1 et T2 sur la figure 22. Un seul plan de trame est montré, les autres s'en déduisant par décalage d'un pas entre colonnes de fils de chaîne.

Dans l'exemple illustré par les figures 22 et 23, le tissage est réalisé avec une armure interlock. D'autres armures pourront bien entendu être utilisées. Les armatures peuvent être différentes entre d'une part, les parties 310 et, d'autre part, la partie 320, de même qu'entre les parties 310. En outre, le nombre de couches de fils de chaîne dans les parties 310 et 320 pourra bien entendu être différent de 3, le nombre de couches de fils de trame étant adapté en conséquence. On notera aussi que dans les parties 310 seuls certains des fils de trame pourront être tissés initialement avec sur-longueurs.

Après tissage, les parties non tissées des fils étant supprimées, la structure tissée peut être mise en forme comme représenté sur la figure 20 en repliant sur elles-mêmes les parties 310 avec traction exercée sur les extrémités des fils de trame réinsérés T1, T2. On obtient alors des parties creuses chacune entièrement délimitée par une paroi tissée multicouches comprenant plusieurs couches de fils liées entre elles par tissage dans toute l'épaisseur de la paroi. Dans les parties tubulaires formées par replis des parties 310, les bords 312a forment des décrochements 315. Ceux-ci peuvent être éliminés ou évités de la même manière que décrit plus haut en référence aux figures 3 et 4 pour aboutir à une préforme fibreuse telle que montrée sur la figure 21.

La conformation de la structure tissée 300 au moyen d'un outillage pour obtenir une préforme fibreuse de la pièce 30 et le traitement de la préforme pour obtenir la pièce voulue peuvent être realisés comme décrit plus haut pour le premier mode de réalisation.

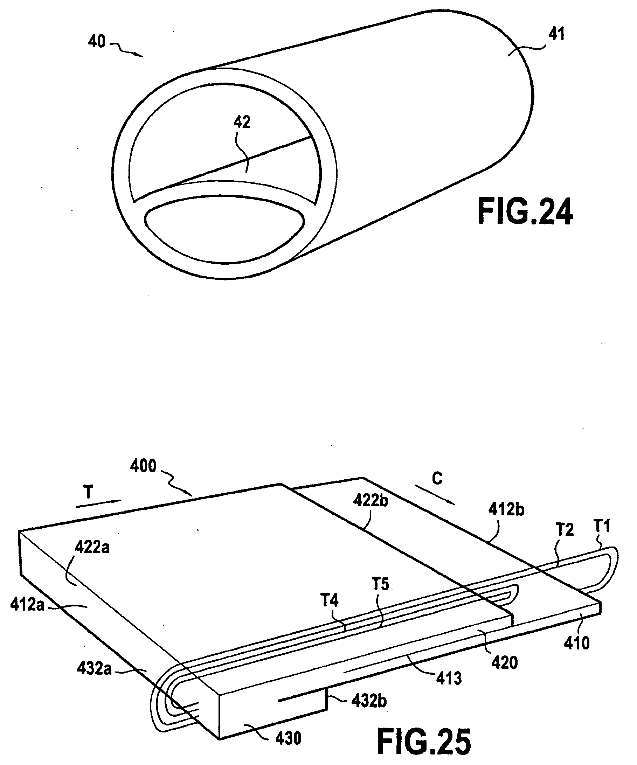

La figure 24 montre encore une autre pièce 40 ayant une partie 41 creuse de forme sensiblement tubulaire avec une cloison 42 partageant le volume interne de la partie creuse 41 sur toute sa longueur. Une telle pièce creuse cloisonnée peut par exemple être utilisée pour un bras de carter intermédiaire dans un turbomoteur aéronautique présentant deux conduits séparés pour le passage de fonctionnalités différentes, par exemple un arbre radial transmettant de la puissance mécanique à une boîte de relias d'accessoires ou AGB ("Accessory Gear Box") d'un côté de la cloison 42 et une liaison électrique de l'autre côté, ou encore des tubes de transport de fluides. La cloison 42 peut aussi avoir une simple fonction de raidisseur de la pièce 40.

Un exemple de réalisation d'une structure fibreuse tissée en une seule pièce par tissage multicouches et formant, après conformation, une préforme fibreuse de la pièce 40 sera maintenant décrit en référence aux figures 25, 26, 27 et 28A à 28D.

La figure 25 montre la structure fibreuse 400 au stade du tissage, avant conformation. La structure fibreuse 400 comprend une première partie tissée 410 destinée, après conformation par repli sur elle-même, à former, en grande partie, la partie de renfort fibreux correspondant à la partie tubulaire 41, une deuxième partie tissée 420 destinée à former, après conformation par repli sur elle-même, la partie de renfort fibreux correspondant à la cloison 42 et une troisième partie tissée 430.

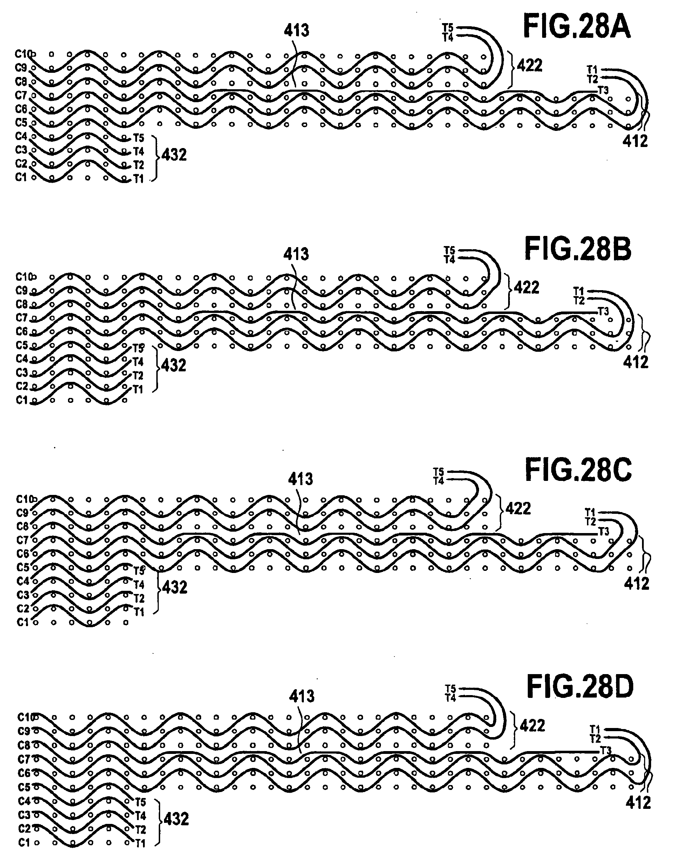

Les figures 28A à 28D montrent à titre d'exemple 4 plans de trame successifs dans la structure tissée 400.

Le tissage est réalisé avec un premier ensemble 412 de couches de fils de chaîne C5, C6, C7 pour la partie 410, un deuxième ensemble 422 de couches de fils de chaîne C8, C9, C10 pour la partie 420 et un troisième ensemble 432 de fils de chaîne C1, C2, C3, C4 pour la partie 430. Dans la partie 410, les couches de fils de chaîne s'étendent en sens trame (flèche T) sur une largeur correspondant sensiblement à la longueur développée d'une circonférence de la partie tubulaire 11. Dans la partie 420, les couches de fils de chaîne s'étendent au sens trame sur une largeur inférieure à celle de la partie 410 mais suffisante pour former après repli la partie de renfort fibreux correspondant à la cloison 42. Dans la partie 430, les couches de fils de chaîne s'étendent en sens trame sur une largeur encore inférieure. Les ensembles de couches de fils de chaîne 430, 410 et 420 sont disposés l'un au-dessus de l'autre dans cet ordre et présentent, en sens chaîne (flèche C) des bords longitudinaux respectifs 432a, 412a, 422a situés sensiblement dans un même plan du côté de l'alimentation en fils de trame. En sens chaîne, les parties tissées 410, 420, 430 s'étendent sur une même longueur. La partie tissée 410 est liée à la partie tissée 430 sur toute sa largeur tandis que la partie tissée 420 est liée à la partie tissée 420 sur une partie seulement de sa largeur à partir du bord 422a ménageant ainsi une zone de déliaison 413 entre les parties 410 et 420. La distance en sens trame sur laquelle les parties 410 et 420 sont liées est par exemple sensiblement égale ou légèrement supérieure à la largeur de la partie 430. Sur la figure 25, par souci de clarté, seules les enveloppes des parties tissées 410, 420, 430 sont représentées.

Comme le montrent les figures 28A à 28D, dans une même colonne de trame, des fils de trame T1, T2 lient des fils de chaîne des couches de fils de chaîne C5, C6, C7, tandis qu'un fil de trame T3 lie des fils de chaîne des couches de fils de chaîne C7 et C8 et que des fils de trame T4, T5 lient des fils de chaîne des couches de fils de chaîne C8, C9 et C10.

Les fils de trame T1 et T2 sont introduits avec sur-longueurs pour présenter des parties d'extrémité s'étendant au-delà de la zone de tissage, c'est-à-dire au-delà du bord longitudinal 412b de la partie tissée 410 opposé au bord 412a. Ces parties d'extrémité ont une longueur suffisante pour pouvoir être ramenées du côté du bord 432a et être réinsérées dans des couches de fils de chaîne dans la partie 430. Ainsi, le fil de trame T1, après avoir lié entre eux des fils de chaîne des couches C5 et C6, est réutilisé pour lier entre eux des fils de chaîne des couches C1 et C2 tandis que le fil de trame T2, après avoir lié entre eux des fils de chaîne de couches C6 et C7, est réutilisé pour lier entre eux des fils de chaîne de couches C2 et C3.

Le fil de chaîne T3 lie entre eux des fils de chaîne des couches C7 et C8 sur une distance limitée à partir des bords 412a, 422a afin de ménager la zone de déliaison 413 entre les parties tissées 410 et 420.

Les fils de trame T4 et T5 sont introduits avec sur-longueurs pour présenter des parties d'extrémité s'étendant au-delà de la zone de tissage, c'est-à-dire au-delà du bord longitudinal 422b de la partie tissée 420 opposée au bord 422a. Ces parties d'extrémité ont une longueur suffisante pour pouvoir être ramenées du côté du bord 432a et être réinsérées dans des couches de fils de chaîne dans la partie 430. Ainsi, le fil de trame T4, après avoir lié entre eux des fils de chaîne des couches C8 et C9, est réutilisé pour lier entre eux des fils de chaîne des couches C3 et C4 tandis que le fil de trame T5, après avoir lié entre eux des fils de chaîne des couches C9 et C10, est réutilisé pour lier entre eux des fils de chaîne des couches C4 et C5.

Le retour des parties d'extrémité des fils de trame tissés initialement avec sur-longueurs n'est montré sur la figure 25 que pour des fils de trame T1, T2, T4, T5 d'un seul plan de trame.

Les plans de trame des figures 28A à 28D se déduisent l'un de l'autre par un décalage d'un pas entre colonnes de fils de chaîne.

Sur ces figures, on a représenté une armure de type interlock. D'autres types d'armure sont bien entendu utilisables. Les armures des parties 410, 420 et 430 ne sont pas nécessairement les mêmes. Il est aussi possible de faire varier l'armure au sein d'une même partie 410, 420 ou 430. Par ailleurs, le nombre de couches de fils de chaîne dans les parties 410, 420 et 430 pourrait être différent de 3, 3 et 4, respectivement, le nombre de couches de fils de trame étant adapté en conséquence. On notera aussi que seuls certains seulement des fils de trame liant des fils de chaîne dans les parties 410 et 420 pourront être tissés avec sur-longueurs.

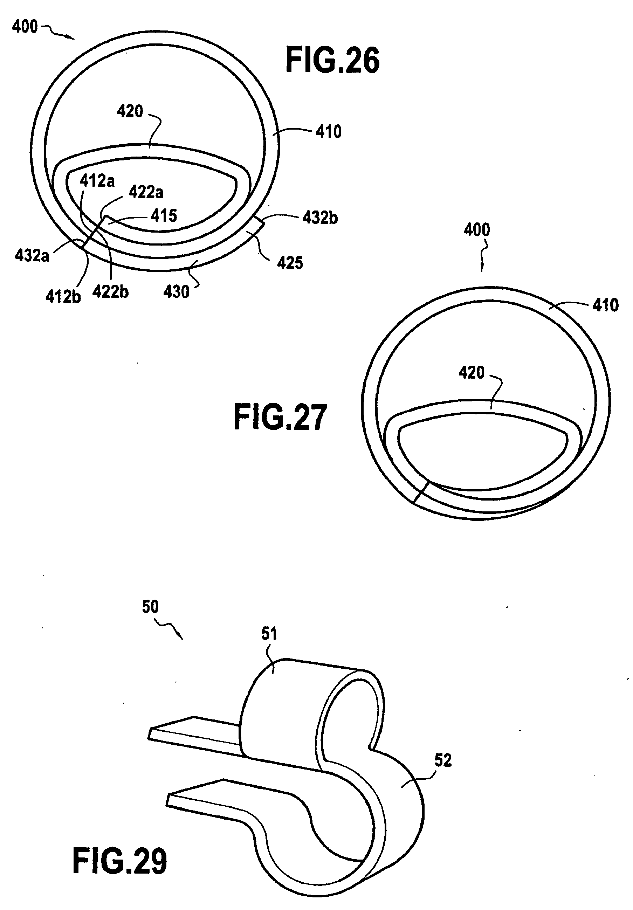

Après tissage, les parties non tissées des fils étant supprimées, la structure tissée 400 est mise en forme comme représenté sur la figure 26 (vue en bout) en repliant sur elles-mêmes les parties tissées 410, 420 avec traction exercée sur les extrémités des fils de trame réinsérés T1, T2, T4 et T5. On obtient alors une partie creuse cloisonnée entièrement délimitée par une paroi tissée multicouches comprenant plusieurs couches de fils liées entre elles par tissage dans toute l'épaisseur de la paroi. La mise en forme peut être réalisée en enroulant les parties 410 et 420 autour de noyaux.

Dans les parties tubulaires formées par repli des parties 410, 420, les bords 412a et 432b forment des décrochements 415, 425. Ceux-ci peuvent être éliminés de façon semblable à celle décrite plus haut pour le premier mode de réalisation (figures 3 et 4) pour obtenir la forme montrée sur la figure 27 (vue en bout).

La conformation au moyen d'un outillage pour obtenir une préforme fibreuse de la pièce 40 et le traitement de la préforme pour obtenir la pièce voulue peuvent être réalisés comme décrit plus haut pour le premier mode de réalisation.

Dans le mode de réalisation des figures 24-27 et 28A-28D, les fils de trame tissés avec sur-longueurs dans les parties 410 et 420 sont réintroduites dans la partie 430 dans un même plan de trame. En variante, les parties d'extrémité des fils de trame d'un plan de trame donné tissés avec sur-longueurs dans la partie 410 pourront être réintroduites dans un plan de trame suivant pour être tissées avec des fils de chaîne de la même partie 410. De façon similaire, les parties d'extrémité des fils de trame d'un plan de trame donné tissés avec sur-longueurs dans la partie 420 pourront être réintroduites dans un plan de trame suivant pour être tissées avec des fils de chaîne de la même partie 420.

Bien entendu, en appliquant un principe de tissage, similaire à celui décrit ci-avant, on pourra réaliser une pièce creuse multi-cloisonnée, c'est-à-dire avec plusieurs cloisons longitudinales partageant son volume interne.

En outre, dans la pièce, la cloison ou l'une au moins des cloisons lorsqu'il y en a plusieurs, pourra s'étendre sur une longueur inférieure à celle de la partie creuse, la partie de structure fibreuse correspondant à la ou chaque cloison de longueur réduite, telle que la partie 420 sur la figure 25, étant alors tissée sur une distance inférieure en sens chaîne en comparaison avec les autres parties de la structure fibreuse.

La figure 29 illustre encore une autre pièce 50 pouvant être obtenue à partir d'une structure tissée en une seule pièce par tissage multicouches, conformément à l'invention. La pièce 50 comprend une partie creuse tubulaire 51 solidaire d'une autre partie 52 recourbée autour d'un axe différent de l'axe de la partie 51, par exemple perpendiculaire à celui-ci. Une telle pièce peut être utilisée par exemple comme renvoi d'angle. Pour obtenir la pièce 50, on peut utiliser une structure tissée telle que celle 100 de la figure 2, la partie de préforme fibreuse correspondant à la partie creuse 51 étant obtenue par repli sur elle-même de la partie 110 de la structure fibreuse 100 et la partie de préforme fibreuse correspondant à la partie 52 étant obtenue en recourbant la partie 120 de la structure fibreuse 100.

## Revendications

1. Procédé de réalisation d'une structure tissée en une seule pièce par tissage multicouches et comprenant au moins une partie creuse (110 ; 210 ; 310), le procédé étant **caractérisé en ce qu'**il comporte :
- le tissage des fils de chaîne d'au moins un premier ensemble (112 ; 212 ; 312) de couches de fils de chaîne avec des fils de trame dont au moins certains (T1, T2 ; T4, T5, T6) sont amenés sur une distance supérieure à la largeur du premier ensemble de couches de fils de chaîne mesurée en sens trame pour disposer de parties d'extrémité de fils de trame s'étendant au-delà de la zone de tissage,
- le retour des parties d'extrémité desdits fils de trame pour les tisser avec des fils de chaîne en les réinsérant dans des couches de fils de chaîne, et
- la formation de ladite partie creuse par repli sur lui-même du premier ensemble tissé de couches de fils de chaîne et traction sur les extrémités des fils de trame réinsérés.

2. Procédé selon la revendication 1, **caractérisé en ce que** les parties d'extrémité desdits fils de trame (T1, T2) sont réinsérées dans des couches de fils de chaîne d'un deuxième ensemble (122 ; 322) de couches de fils de chaîne, le premier et le deuxième ensemble de couches de fils de chaîne étant superposés et liés l'un à l'autre sur une partie seulement de la largeur en sens trame du premier ensemble (112 ; 312) de fils de chaîne.

3. Procédé selon la revendication 1, **caractérisé en ce que** les parties d'extrémité desdits fils de trame (T4, T5, T6) sont réinsérées dans des couches de fils de chaîne du premier ensemble (212) de couches de fils de chaîne en des emplacements décalés en sens chaîne par rapport aux emplacements de leur insertion initiale.

4. Procédé de réalisation d'une structure tissée en une seule pièce par tissage multicouches et comprenant au moins une partie creuse (410) cloisonnée longitudinalement, le procédé étant **caractérisé en ce qu'**il comporte :
- le tissage des fils de chaîne d'un premier ensemble (412) de couches de fils de chaîne avec des fils de trame dont au moins certains (T4, T5) sont insérés dans les couches de fils de chaîne du premier ensemble de couches de fils de chaîne en étant amenés sur une distance supérieure à la longueur du premier ensemble de couches de fils de chaîne mesurée en sens trame pour disposer de parties d'extrémité de fils de trame s'étendant au-delà de la zone de tissage,
- le tissage des fils de chaîne d'un deuxième ensemble (422) de couches de fils de chaîne avec des fils de trame dont au moins certains (T1, T2) sont insérés dans les couches de fils de chaîne du deuxième ensemble de couches de fils de chaîne en étant amenés sur une distance supérieure à la longueur du deuxième ensemble de couches de fils de chaîne mesurée en sens trame pour disposer de parties d'extrémité de fils de trame s'étendant au-delà de la zone de tissage, le premier (412) et le deuxième (422) ensembles de couches de fils de chaîne étant disposés l'un au-dessus de l'autre et liés l'un à l'autre sur une partie seulement de leur largeur en sens trame,
- le retour desdites parties d'extrémité de fils de trame pour les tissés avec des fils de chaîne en les réinsérant dans des couches de fils de chaîne, et
- la formation de ladite partie creuse cloisonnée par repli sur eux-mêmes du premier et du deuxième ensemble de couches de fils de chaîne et traction sur les extrémités des fils de trame réinsérés.

5. Procédé selon la revendication 4, **caractérisé en ce que** lesdites parties d'extrémité libres desdits fils de trame sont réinsérées dans des couches de fils de chaîne d'un troisième ensemble (432) de couches de fils de chaîne, le premier, le deuxième et le troisième ensemble de fils de chaîne étant superposés, et le premier (412) et le deuxième (422) ensembles de couches de fils de chaîne étant liés au troisième ensemble de couches de fils de chaîne sur une partie seulement de leur largeur.

6. Procédé selon la revendication 4, **caractérisé en ce que** lesdites parties d'extrémité desdits fils de trame sont réinsérées dans des couches de fils de chaîne du premier et du deuxième ensemble de couches de fils de chaîne en des emplacements décalés en sens chaîne par rapport aux emplacements de leur insertion initiale.

7. Procédé selon l'une quelconque des revendications 1 à 6, **caractérisé en ce que** la partie creuse (110) est formée sur une partie seulement de la longueur de la structure tissée en sens chaîne.

8. Structure fibreuse tissée en une seule pièce par tissage multicouches et comprenant au moins une partie creuse (110 ; 210 ; 310 ; 410), la au moins une partie creuse étant entièrement délimitée par une paroi tissée multicouches comprenant plusieurs couches de fils liées entre elles par tissage dans toute l'épaisseur de la paroi, **caractérisée en ce que** la partie creuse est formée par repli sur elle-même d'une partie tissée, la partie tissée comprenant au moins un premier ensemble (112 ; 212 ; 312) de couches de fils de chaine tissées entre elles par des fils de trame dont au moins certains (T1, T2 ;T4, T5, T6) sont amenés sur une distance supérieure à la largeur du premier ensemble de couches de fils de chaîne mesurée en sens trame pour disposer de parties d'extrémité de fils de trame s'étendant au-delà de la zone de tissage, au moins certains des fils de trame (T1, T2 ; T4, T5, T6) étant réinsérés dans des couches de fils de chaine.

9. Structure fibreuse selon la revendication 8, **caractérisée en ce qu'**elle comprend une partie creuse (110 ; 210 ; 310) et une autre partie (120 ; 220 ; 320) adjacente à la partie creuse et liée à celle-ci par tissage.

10. Structure fibreuse selon l'une quelconque des revendications 8 et 9, **caractérisée en ce que** la partie creuse (410) est cloisonnée longitudinalement.

11. Pièce (10 ; 10a ; 20 ; 30 ; 40 ; 50) en matériau composite présentant au moins une partie creuse et comprenant une structure fibreuse de renfort selon l'une quelconque des revendications 8 à 10, la structure fibreuse de renfort étant densifiée par une matrice.

12. Pièce selon la revendication 11 constituant une pièce de support et/ou de guidage d'un turbomoteur aéronautique.

## Patentansprüche

1. Verfahren zur Herstellung einer Struktur, die durch Mehrlagenweben einstückig gewebt ist und wenigstens einen hohlen Teil (110; 210; 310) umfasst, wobei das Verfahren **dadurch gekennzeichnet ist, dass** es umfasst:
- das Verweben der Kettfäden wenigstens einer ersten Anordnung (112; 212; 312) von Kettfadenlagen mit Schussfäden, von denen wenigstens einige (T1, T2; T4, T5, T6) über eine Strecke größer als die Breite der ersten Anordnung von Kettfadenlagen, gemessen in Schussrichtung, geführt sind, um über Schussfadenendteile, die sich über den Webbereich hinaus erstrecken, zu verfügen,
- das Umkehren der Endteile der Schussfäden, um sie mit Kettfäden unter Wiedereinfügen in Kettfadenlagen zu verweben, und
- das Ausbilden des hohlen Teils durch Umschlagen der ersten gewebten Anordnung von Kettefadenlagen auf sich selbst und Ziehen an den Enden der wieder eingefügten Schussfäden.

2. Verfahren nach Anspruch 1, **dadurch gekennzeichnet, dass** die Endteile der Schussfäden (T1, T2) in Kettfadenlagen einer zweiten Anordnung (122; 322) von Kettfadenlagen wieder eingefügt werden, wobei die erste und die zweite Anordnung von Kettfadenlagen übereinander angeordnet sind und nur über einen Teil der Breite in Schussrichtung der ersten Anordnung (112; 312) von Kettfäden miteinander verbunden sind.

3. Verfahren nach Anspruch 1, **dadurch gekennzeichnet, dass** die Endteile der Schussfäden (T4, T5, T6) in Kettfadenlagen der ersten Anordnung (212) von Kettfadenlagen an Stellen wieder eingefügt werden, die in Kettrichtung gegenüber den Stellen ihres anfänglichen Einfügens versetzt sind.

4. Verfahren zur Herstellung einer Struktur, die durch Mehrlagenweben einstückig gewebt ist und wenigstens einen längs unterteilten hohlen Teil (410) umfasst, wobei das Verfahren **dadurch gekennzeichnet ist, dass** es umfasst:
- das Verweben der Kettfäden einer ersten Anordnung (412) von Kettfadenlagen mit Schussfäden, von denen wenigstens einige (T4, T5) in die Kettfadenlagen der ersten Anordnung von Kettfadenlagen eingefügt sind, indem sie über eine Strecke größer als die Länge der ersten Anordnung von Kettfadenlagen, gemessen in Schussrichtung, geführt werden, um über Schussfadenendteile, die sich über den Webbereich hinaus erstrecken, zu verfügen,
- das Verweben der Kettfäden einer zweiten Anordnung (422) von Kettfadenlagen mit Schussfäden, von denen wenigstens einige (T1, T2) in die Kettfadenlagen der zweiten Anordnung von Kettfadenlagen eingefügt sind, indem sie über eine Strecke größer als die Länge der zweiten Anordnung von Kettfadenlagen, gemessen in Schussrichtung, geführt werden, um über Schussfadenendteile, die sich über den Webbereich hinaus erstrecken, zu verfügen, wobei die erste (412) und die zweite (422) Anordnung von Kettfadenlagen übereinander angeordnet sind und nur über einen Teil ihrer Breite in Schussrichtung miteinander verbunden sind,
- das Umkehren der Schussfadenendteile, um sie mit Kettefäden unter Wiedereinfügen in Kettfadenlagen zu verweben, und
- das Ausbilden des unterteilten hohlen Teils durch Umschlagen der ersten und der zweiten Anordnung von Kettefadenlagen auf sich selbst und Ziehen an den Enden der wieder eingefügten Schussfäden.

5. Verfahren nach Anspruch 4, **dadurch gekennzeichnet, dass** die freien Endteile der Schussfäden in Kettfadenlagen einer dritten Anordnung (432) von Kettfadenlagen wieder eingefügt werden, wobei die erste, die zweite und die dritte Anordnung von Kettfäden übereinander angeordnet sind, und wobei die erste (412) und die zweite (422) Anordnung von Kettfadenlagen mit der dritten Anordnung von Kettfadenlagen nur über einen Teil ihrer Breite verbunden sind.

6. Verfahren nach Anspruch 4, **dadurch gekennzeichnet, dass** die Endteile der Schussfäden in Kettfadenlagen der ersten und der zweiten Anordnung von Kettfadenlagen an Stellen wieder eingefügt werden, die in Kettrichtung gegenüber den Stellen ihres anfänglichen Einfügens versetzt sind.

7. Verfahren nach einem der Ansprüche 1 bis 6, **dadurch gekennzeichnet, dass** der hohle Teil (110) nur über einen Teil der Länge der gewebten Struktur in Kettrichtung ausgebildet ist.

8. Faserstruktur, die durch Mehrlagenweben einstückig gewebt ist und wenigstens einen hohlen Teil (110; 210; 310; 410) umfasst, wobei der wenigstens eine hohle Teil durch eine gewebte Mehrlagenwand mit mehreren Fadenlagen, die durch Weben in der gesamten Dicke der Wand untereinander verbunden sind, vollständig begrenzt ist, **dadurch gekennzeichnet, dass** der hohle Teil durch Umschlagen eines gewebten Teils auf sich selbst ausgebildet ist,
der gewebte Teil wenigstens eine erste Anordnung (112; 212; 312) von Kettfadenlagen umfasst, die durch Schussfäden, von denen wenigstens einige (T1, T2; T4, T5, T6) über eine Strecke größer als die Breite der ersten Anordnung von Kettfadenlagen, gemessen in Schussrichtung, geführt sind, um über Schussfadenendteile, die sich über den Webbereich hinaus erstrecken, zu verfügen, untereinander verwebt sind, wobei wenigstens einige der Schussfäden (T1, T2; T4, T5, T6) in Kettfadenlagen wieder eingeführt sind.

9. Faserstruktur nach Anspruch 8, **dadurch gekennzeichnet, dass** sie einen hohlen Teil (110; 210; 310) und einen weiteren Teil (120; 220; 320), der zu dem hohlen Teil benachbart und mit diesem durch Weben verbunden ist, umfasst.

10. Faserstruktur nach einem der Ansprüche 8 bis 9, **dadurch gekennzeichnet, dass** der hohle Teil (410) längs unterteilt ist.

11. Teil (10; 10a; 20; 30; 40; 50) aus Verbundwerkstoff, das wenigstens einen hohlen Teil aufweist und eine Verstärkungsfaserstruktur nach einem der Ansprüche 8 bis 10 umfasst, wobei die Verstärkungsfaserstruktur durch eine Matrix verdichtet ist.

12. Teil nach Anspruch 11, das ein Teil zum Tragen und/oder zum Führen eines Luftfahrtturbomotors bildet.

## Claims

1. A method of making a structure woven as a single piece by multilayer weaving and comprising at least one hollow portion (110; 210; 310), the method comprising:
• weaving warp yarns of at least a first set (112; 212; 312) of layers of warp yarns with weft yarns including at least some weft yarns (T1, T2; T4, T5, T6) that are taken over a distance that is greater than the width of the first set of layers of warp yarns measured in the weft direction in order to have weft yarn end portions available that extend beyond the zone of weaving;
• returning the end portions of said weft yarns so as to weave them with warp yarns by reinserting them in layers of warp yarns; and
• forming said hollow portion by looping the first woven set of layers of warp yarns back onto itself and applying traction to the ends of the reinserted weft yarns.

2. A method according to claim 1, **characterized in that** the end portions of said weft yarns (T1, T2) are reinserted in layers of warp yarns of a second set (122; 322) of layers of warp yarns, the first and second sets of layers of warp yarns being superposed and connected together over a fraction only of the width in the weft direction of the first set (112; 312) of warp yarns.

3. A method according to claim 1, **characterized in that** the end portions of said weft yarns (T4, T5, T6) are reinserted in layers of warp yarns of the first set (212) of layers of warp yarns at locations that are offset in the warp direction relative to the locations of their initial insertion.

4. A method of making a structure woven as a single piece by multilayer weaving and comprising at least one hollow portion (410) that is longitudinally partitioned, the method comprising:
• weaving warp yarns of a first set (412) of layers of warp yarns with weft yarns including at least some (T4, T5) that are inserted in layers of warp yarns of the first set of layers of warp yarns while being taken over a distance that is greater than the length of the first set of layers of warp yarns measured in the weft direction in order to have weft yarn end portions available that extend beyond the zone of weaving;
• weaving warp yarns of a second set (422) of layers of warp yarns with weft yarns including at least some (T1, T2) that are inserted in layers of warp yarns of the second set of layers of warp yarns while being taken over a distance that is greater than the length of the second set of layers of warp yarns measured in the weft direction in order to have weft yarn end portions available that extend beyond the zone of weaving, the first and second sets (412, 422) of layers of warp yarns being arranged one above another and being interlinked over a fraction only of their width in the weft direction;
• returning said weft yarn end portions so as to weave them with warp yarns by reinserting them in layers of warp yarns; and
• forming said partitioned hollow portion by looping the first and second sets of layers of warp yarns back onto themselves and applying traction to the ends of the reinserted weft yarns.

5. A method according to claim 4, **characterized in that** said free end portions of said weft yarns are reinserted in layers of warp yarns of a third set (432) of layers of warp yarns, the first, second, and third sets of warp yarns being superposed, and the first and second sets (412, 422) of layers of warp yarns being interlinked with the third set of layers of warp yarns over a fraction only of their width.

6. A method according to claim 4, **characterized in that** said end portions of said weft yarns are reinserted in layers of warp yarns of the first and second sets of layers of warp yarns at locations that are offset in the warp direction relative to the locations of their initial insertion.

7. A method according to any one of claims 1 to 6, **characterized in that** the hollow portion (110) is formed over a fraction only of the length of the woven structure in the warp direction.

8. A fiber structure woven as a single piece by multilayer weaving and comprising at least one hollow portion (110; 210; 310; 410) that is entirely defined by a multilayer woven wall made up of a plurality of layers of yarns interlinked by weaving throughout the thickness of the wall, **characterized in that** the hollow portion is formed by looping a woven portion back onto itself, the woven portion comprising a first set (112; 212; 312) of layers of warp yarns woven with weft yarns including at least some weft yarns (T1, T2; T4, T5, T6) that are taken over a distance that is greater than the width of the first set of layers of warp yarns measured in the weft direction in order to have weft yarn end portions available that extend beyond the zone of weaving, at least some of the weft yarns (T1, T2; T4, T5, T6) being reinserted in layers of warp yarns.

9. A fiber structure according to claim 8, **characterized in that** it comprises a hollow portion (110; 210; 310) together with another portion (120; 220; 320) that is adjacent to the hollow portion and interlinked therewith by weaving.

10. A fiber structure according to claim 8 or claim 9, **characterized in that** the hollow portion (410) is partitioned longitudinally.

11. A part (10; 10a; 20; 30; 40; 50) made of composite material presenting at least one hollow portion and comprising a reinforcing fiber structure according to any one of claims 8 to 10, the reinforcing fiber structure being densified with a matrix.

12. A part according to claim 11, constituting a support and/or guide part for an aviation turbine engine.
